# DEMANDE DE BREVET EUROPEEN

(11) **EP 1 010 677 A1**
(43) Date de publication de la demande: **21.06.2000**
(21) Numéro de dépôt: 99403146.6
(22) Date de dépôt: 15.12.1999
(51) Int. Cl.: C03C 17/36, G02B 1/10

(54) **Systeme de couches reflechissant la chaleur pour substrats transparents**

(30) Priorité: 17.12.1998 DE 19858226; 17.12.1998 DE 19858227; 19.08.1999 DE 19939287; 19.08.1999 DE 19939288
(71) Demandeur: SAINT-GOBAIN VITRAGE, 92400 Courbevoie (FR)
(72) Inventeur: Le Masson, Pascal, 75012 Paris (FR); Maurer, Marc, 4800 Verviers (BE); Hans, Alfred, 52159 Roetgen (DE); Fischer, Klaus, 52477 Alsdorf (DE); Billert, Ulrich, 52066 Aachen (DE)
(74) Mandataire: Renous Chan, Véronique

(57) **Abrégé**

Le système de couches réfléchissant les rayons thermiques selon l'invention comprend au moins une couche fonctionnelle à base d'argent, et présente une couche antireflet supérieure constituée d'un ou plusieurs des oxydes métalliques TiO₂, SnO₂, ZnO, Ta₂O₅ ou Nb₂O₅. La partie supérieure de cette couche antireflet inférieure est remplacée par une couche formée de ZnO. Selon une autre variante, on dispose au-dessus de l'argent une couche très fine en métal ou en sous-nitrure. Ce système de couches est particulièrement approprié au revêtement de films de polymère qui sont assemblés à des substrats de verre par l'intermédiaire de couches adhésives.

## Description

La présente invention concerne un système de couches réfléchissant les rayons thermiques (contrôle solaire ou bas-émissivité) pour des substrats transparents, comprenant au moins une couche fonctionnelle formée d'argent et des revêtements antireflets diélectriques, le revêtement antireflet supérieur comportant une couche d'un nitrure métallique, en particulier AlN, de nitrure de silicium Si₃N₄, ou d'un nitrure mixte d'un métal et de silicium.

On connaît du document EP-0 281 048 B1 un empilement de couches comprenant une couche fonctionnelle formée d'argent dans lequel tant la couche antireflet inférieure que la couche antireflet supérieure sont constituées d'un nitrure métallique, de préférence un nitrure d'aluminium ou un nitrure de silicium. Contrairement aux oxydes métalliques servant de couches antireflet diélectriques, les nitrures métalliques ont l'avantage de présenter une résistance mécanique et chimique particulièrement élevée. Ce système de couches connu ne présente pas de couche de protection métallique au-dessus de la couche d'argent. Des couches de protection métalliques ou obtenues par sous-oxydation sont généralement nécessaires dans le cas de couches antireflet obtenues par voie d'oxydation (pulvérisation cathodique en atmosphère oxydante). Sinon, la couche d'argent risque d'être endommagée par l'oxygène lors de la pulvérisation réactive de la couche antireflet supérieure.

Un système de couches à base d'argent comprenant des couches antireflet diélectriques en nitrure d'aluminium est également connu du document DE 39 41 046 C2. Dans ce système de couches, une couche de blocage d'une épaisseur de 2 à 20 nm formée de Zn métallique est disposée entre la couche fonctionnelle formée d'argent et la couche antireflet déposée par-dessus. Cette couche de blocage doit permettre d'éviter le risque d'un endommagement à long terme de la couche d'argent par oxydation. La couche de Zn métallique réduit toutefois la transmission lumineuse du système de couches, de sorte que ce système de couches ne peut être utilisé lorsqu'un facteur de transmission lumineuse de 75% est requis, ce qui est le cas des pare-brise de véhicules automobiles.

On connaît du document DE 41 35 701 A1 un système de couches réfléchissant les rayons thermiques comprenant une couche fonctionnelle formée d'argent et des couches antireflet diélectriques constituées d'oxydes métalliques ou de nitrures métalliques, dans lequel une couche de blocage formée de deux couches partielles est appliquée sur la couche d'argent. Cette couche de blocage est constituée d'une première couche partielle formée de Pd ou de Pt, d'une épaisseur de 0,2 à 0,5 nm, déposée directement sur la couche d'argent et d'une seconde couche partielle déposée sur la première et formée de Ti, Cr ou d'un mélange de ceux-ci ou d'un alliage comportant au moins 15% d'un de ces métaux, d'une épaisseur de 0,5 à 5 nm. Cette couche de blocage formée de deux couches doit accroître la résistance à l'humidité du système de couches. Cela requiert toutefois une chambre de dépôt supplémentaire dans l'installation de pulvérisation cathodique. En outre, étant donné que le Pd et le Pt sont des métaux très coûteux, la fabrication de ce système de couches est coûteux.

Le document DE 19 52 0843 A1 décrit un système de couches constitué d'une suite de couches comprenant une première couche constituée d'un oxyde métallique ou d'un nitrure métallique, une deuxième couche constituée d'un sous-oxyde de Zn et/ou de Ta ou d'un mélange de ceux-ci, une couche fonctionnelle formée d'argent, une quatrième couche métallique ou de sous-oxyde métallique appliquée sur la couche d'argent et constituée d'un des métaux Ti, Cr, Nb ou d'un mélange de ceux-ci ou d'un alliage comportant un de ces métaux et une cinquième couche antireflet supérieure formée du matériau de la première couche. La couche de blocage métallique ou obtenue par voie de sous-oxydation déposée sur la couche d'argent doit garantir la résistance mécanique et chimique du système. Ce système de couches comprend également un total de cinq couches individuelles.

Les systèmes de couches comprenant une couche antireflet supérieure constituée d'un nitrure métallique, plus particulièrement de AlN ou de Si₃N₄, se sont distingués par leur bonne résistance à la corrosion. Il s'est pourtant avéré que leurs propriétés n'étaient pas encore satisfaisantes à tout point de vue.

L'invention a pour but de tirer profit des avantages connus d'un système de couches comprenant une couche antireflet supérieure comprenant un nitrure métallique, à savoir leur haute résistance à la corrosion et au vieillissement, et de mettre au point un système de couches comprenant cette couche de recouvrement et qui présente des propriétés encore améliorées, notamment concernant sa résistance mécanique et chimique.

Pour atteindre ce but, l'invention a mis au point deux variantes alternatives ou cumulatives.

Selon une première variante, le système de couches conforme à l'invention se caractérise par le fait que la couche antireflet supérieure comprend au moins une couche en un nitrure métallique, comme en particulier AlN, Si₃N₄,ou nitrure mixte SiAl ou SiZr. Préférentiellement, la couche antireflet supérieure n'est constituée que de ce type de matériau. La couche antireflet inférieure est constituée d'un ou plusieurs des oxydes métalliques du type TiO₂, SnO₂, Ta₂O₅ ou Nb₂O₅, étant entendu que sa partie supérieure, à savoir la partie contiguë à la couche d'argent, est remplacée sur une épaisseur de 5 à 15 nm par du ZnO. De préférence, l'épaisseur optique de la couche partielle en ZnO corresponde à l'épaisseur optique de la partie de la couche d'oxyde métallique remplacée par la couche partielle formée de ZnO.

Dans l'ensemble du présent texte, le terme de « couche antireflet » signifie qu'elle comporte soit une seule couche, soit une superposition d'au moins deux couches. Selon cette première variante, la « couche antireflet » inférieure comprend au moins deux couches superposées, celle en oxyde et celle en ZnO, la « couche antireflet » supérieure en comprend au minimum une.

Cette structure de couches influence favorablement la structure de la couche d'argent. De ce fait, avec une même épaisseur de la couche d'argent et une même réflexion du rayonnement infrarouge, la transmission lumineuse est accrue. En plus, on obtient, de manière surprenante, une amélioration de l'adhérence de la couche de nitrure métallique sur la couche d'argent. Le rendement au cours de l'opération de dépôt et la qualité du système de couches, à savoir plus particulièrement sa résistance à la corrosion, sont en outre nettement améliorés.

Une amélioration complémentaire de l'adhérence de la couche de nitrure métallique sur la couche d'argent peut être obtenue par le fait qu'entre ces deux couches est déposée une couche formée de Ti, Zr, Al, Cr, Ni ou Hf ou d'un mélange de ceux-ci ou des sous-nitrures de ceux-ci, d'une épaisseur de 0,1 à 1 nm, de préférence de 0,2 à 0,5 nm.

Selon la seconde variante de l'invention, la couche antireflet inférieure est constituée d'un ou plusieurs des oxydes métalliques du type TiO₂, SnO₂, ZnO, Ta₂O₅ ou Nb₂O₅ et la couche antireflet supérieure comprend au moins une couche d'AlN, de Si₃N₄ ou de mélanges de ceux-ci (nitrure mixte SiAl ou SiZr). De préférence, elle n'est constituée que de ce type de matériau. En outre, entre la couche d'argent et la couche antireflet supérieure est disposée une couche formée de métal ou de sous-nitrure, d'une épaisseur de notamment 0,1 à 1 ou 2 nm, destinée à améliorer l'adhérence.

De préférence, la couche formée de métal ou de sous-nitrure destinée à améliorer l'adhérence est constituée de Ti, Zr, Al, Cr, Ni ou Hf ou de mélanges de ceux-ci ou de sous-nitrures de ceux-ci. L'épaisseur de cette couche destinée à améliorer l'adhérence est comprise de préférence entre 0,2 et 0,5 nm : il s'agit d'une épaisseur extrêmement fine, on peut considérer la couche comme vraisemblablement discontinue.

L'amélioration de la résistance à long terme du système de couches conformément à la seconde variante de l'invention, constatée par des tests adéquats, par rapport aux systèmes de couches dans lesquels des couches d'AlN sont directement contiguës à la couche d'Ag, peut être attribuée au fait que l'on obtient une suite de couches plus compacte. L'adhérence et l'ancrage de la couche d'argent sur la couche contiguë formée d'AlN ou de Si₃N₄ s'en trouve améliorée. La restructuration de la surface de cette couche d'ancrage, déterminante pour l'effet d'ancrage, se forme manifestement lors de la pulvérisation de la couche de nitrure métallique suivante. Du côté adjacent à la couche d'argent, cette couche d'ancrage a un caractère sensiblement métallique, et en raison de la disposition de ses atomes, elle contribue à une bonne liaison avec la couche d'argent. Sa structure se modifie en surface par la formation de nitrures (une certaine nitruration) qui permet une meilleure liaison avec la couche de nitrure.

Il n'y a aucun inconvénient à ce que la couche antireflet inférieure soit constituée d'un oxyde métallique au moins plutôt que d'un nitrure métallique. En effet, la résistance à l'humidité éventuellement plus faible de l'oxyde métallique est compensée par le fait que l'oxyde métallique adhère mieux à la couche d'argent que des nitrures métalliques. Les oxydes métalliques cités se laissent bien pulvériser. Ils ont également une influence favorable sur les propriétés optiques du système de couches, de sorte que le système de couches conformément à l'invention présente dans l'ensemble des propriétés sensiblement améliorées.

Le système de couches conformément à l'une ou l'autre des variantes de l'invention est particulièrement approprié pour le revêtement de films transparents en polymère souple, du type polyéthylènetéréphtalate (PET), prévus pour la fabrication de vitrages feuilletés. Les films revêtus sont assemblés à deux feuilles de verres par l'intermédiaire de feuilles adhésives thermoplastiques, constituées en particulier de butyral de polyvinyle (PVB) ou de polyuréthane (PU). Alors que d'autres systèmes de couches tendent, lors d'un contact direct avec des feuilles adhésives de ce type, à présenter des signes de vieillissement sous l'influence des rayons ultraviolets, de tels signes ne sont pas observés dans les systèmes de couches conformément à l'invention, ce qui est très avantageux.

La fabrication industrielle du système de couches est réalisée de préférence par pulvérisation cathodique assistée par un champ magnétique dans des installations de dépôt à défilement continu. Pour les couches antireflet diélectriques, la pulvérisation est réactive avec un pourcentage de O₂ ou, selon le cas, de N₂ comme gaz de travail, pour respectivement, les couches d'azote ou de nitrure. Vu que certains métaux ne peuvent être pulvérisés qu'à un débit de pulvérisation relativement faible, des techniques modernes de pulvérisation, comme par exemple la pulvérisation cathodique rotative ou la pulvérisation cathodique à double cathode, sont à choisir de préférence pour ce type de matériau.

Bien entendu, le système de couches conformément à l'invention peut également comprendre deux couches fonctionnelles à base d'argent séparées l'une de l'autre par une couche diélectrique.
Prévoir deux couches d'argent au lieu d'une permet notamment d'obtenir une meilleure sélectivité (meilleur compromis entre le niveau de transmission lumineuse et les propriétés thermiques recherchées, qui sont soit un contrôle de l'apport solaire soit une basse émissivité). La couche diélectrique « intermédiaire » disposée entre les deux couches d'argent peut aussi comporter une seule couche ou plusieurs couches. Elle peut être conforme à la première variante de l'invention, c'est-à-dire « remplacée » par du ZnO d'épaisseur 5 à 15 nm dans sa partie contiguë à la seconde couche d'argent.

En fait, en présence de deux couches d'argent, au moins l'une d'elles doit respecter une des variantes au moins de l'invention : avoir directement sous elle une couche de ZnO, et/ou être surmontée d'une fine couche métallique éventuellement nitrurée. Avantageusement, les cieux couches d'argent suivent ces conditions. Cependant, il est préférable de prévoir au-dessus de la première couche d'argent, une couche de blocage (sacrificielle) de type métallique, d'épaisseur de par exemple 1 à 3 nm, pour éviter sa détérioration au cas où on doit pulvériser une couche d'oxyde métallique au-dessus d'elle.

L'invention va être détaillée ci-après à l'aide d'exemples de réalisation non limitatifs :

### EXEMPLES 1 à 4

Ces exemples sont conformes à la première variante de l'invention, et utilisent des substrats sous forme de films de PET.

Des exemples de réalisation d'un système de couches selon l'invention sont décrits ci-dessous, et l'amélioration obtenue sur les couches est démontrée par une comparaison avec un système de couches sans couche intermédiaire en ZnO.

Les systèmes de couches sont à chaque fois pulvérisés sur des films transparents en PET d'une épaisseur de 50 µm. Les films de PET revêtus sont incorporés entre deux feuilles thermoplastiques en polyvinylbutyral (PVB), chacune d'une épaisseur de 0,38 mm, et transformés de manière connue en verre feuilleté à partir de ces feuilles de PVB, sous l'application de chaleur et de pression dans un autoclave sous pression. Sur des échantillons de verre feuilletés ainsi préparés, de taille de 30 x 30 cm2, on effectue les tests ci-dessous pour déterminer la résistance chimique :
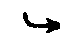 Test A : Test de pulvérisation de brouillard salin selon DIN 50021.
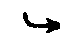 Test B : Test de Kesternich selon DIN 50018.
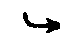 Test C : Test d'humidité selon ANSI Z 26.1,

Après avoir réalisé chaque test, on mesure sur le bord la largeur de la couche corrodée. La largeur de la couche corrodée est une mesure de la résistance de la couche à la corrosion. Pour que le système de couches puisse être utilisé pour l'application dans des vitres composites, les échantillons ne peuvent présenter lors de chaque test qu'une corrosion d'un maximum de 3 mm de largeur sur le bord.

En plus des tests indiqués pour la détermination de la résistance à la corrosion, on effectue ce qu'on appelle un test de pelage selon ANSI Z 26.1 et ECE R43 (Test D) qui permet un avis sur la cohésion des couches partielles du système de couches. Ce test de pelage consiste à n'associer la feuille de PET revêtue qu'à deux feuilles de PVB. On utilise alors de nouveau le procédé décrit de fabrication d'une vitre composite sous l'application de chaleur et de pression, mais entre les vitres et les feuilles de PVB adjacentes, on intercale chaque fois une feuille de séparation, de sorte qu'après pressage et enlèvement des vitres et des feuilles de séparation, on obtienne un stratifié de PVB-PET-PVB. Dans le test de pelage, la feuille de PVB adjacente au système de couches est alors séparée à une extrémité et est repliée et tirée de la feuille de PET revêtue sous un angle d'application de force de 180 degrés. La force nécessaire pour arracher la feuille de PVB est une mesure de l'adhérence de la feuille de PVB au système de couches et de la cohésion des couches partielles du système de couches.

### EXEMPLE 1 COMPARATIF

Le système de couches de l'exemple comparatif présente la construction : 30 nm de TiO₂ - 10 nm d'Ag - 40 nm d'AlN.

### EXEMPLE 1 SELON L'INVENTION

le système de couches de l'exemple de réalisation a la séquence : 20 nm de TiO₂ - 12 nm de ZnO - 10 nm d'Ag - 40 nm d'AlN. La pulvérisation des différentes couches partielles sur la feuille de PET s'effectue dans des conditions de pulvérisation par ailleurs identiques.

Les résultats des tests effectués sont repris dans le tableau ci-dessous. Les résultats du test D représentent la valeur moyenne de cinq mesures.

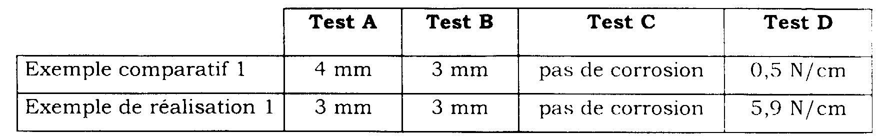

La comparaison entre les résultats d'essai montre que l'on observe non seulement une augmentation considérable de la force de pelage, mais montre en outre également une amélioration du résultat du test de pulvérisation de brouillard salin.

L'étude analytique des surfaces de la feuille de PVB et de la feuille de PET revêtue de l'exemple comparatif et de l'exemple de réalisation, effectuée après le test de pelage, indique par ailleurs que sur la surface de la feuille de PVB, on ne trouve que de l'AlN, alors que, bien que l'on trouve de l'Ag et du Ti sur la couche de la feuille de PET, on n'y trouve cependant que des traces d'AlN. On peut en conclure que l'augmentation de la force de pelage ne découle pas d'une adhérence plus élevée d'AlN à la feuille de PVB mais d'un meilleur ancrage de la couche d'AlN sur la couche d'argent.

### EXEMPLE 2

Il a la séquence de couches suivantes :
Substrat en PET - 30 nm TiO₂ - 12 nm ZnO - 10 nm Ag - 1 nm Ti - 46 nm TiO₂ - 12 nm ZnO - 10 nm Ag - 40 nm AlN.

### EXEMPLE 3

Il a la séquence de couches suivantes :
Substrat en PET - 30 nm TiO₂ - 13 nm ZnO - 10 nm Ag - 20 nm AlN - 31 nm TiO₂ - 12 nm ZnO - 10 nm Ag - 40 nm AlN.

### EXEMPLE 4

Il a la séquence de couches suivantes :
Substrat en PET - 30 nm TiO₂ - 12 nm ZnO - 10 nm Ag - 1 nm Ti - 46 nm TiO₂ - 12 nm ZnO - 10 nm Ag - 0,2 nm Ti - 40 nm AlN.

Il présente la particularité de combiner les deux variantes de l'invention.

Ces derniers exemples montrent également une amélioration de même type que l'exemple 1. Leur résistance à la corrosion est bien meilleure que les empilements de couches de l'état de l'art.

### EXEMPLES 5 et 6

Ces exemples suivent la seconde variante de l'invention. Ils se font en comparaison avec l'exemple 1 comparatif explicité plus haut. Ils sont réalisés comme précédemment (dépôt puis assemblage avec cieux feuilles de PVB à deux feuilles de verre).

### Exemple 5 :

Le système de couches de cet exemple présente la séquence :
30 nm de TiO₂ - 10 nm d'Ag - 0,5 nm de Ti - 40 nm d'AlN.

Les résultats des tests effectués sont repris dans le tableau ci-dessous. Les résultats du test D représentent dans chaque cas la valeur moyenne de cinq mesures.

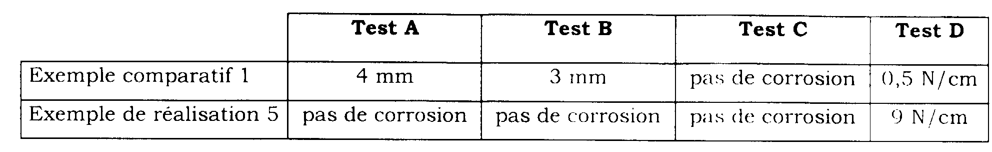

La comparaison entre les résultats d'essai montre que l'on observe non seulement une augmentation considérable de la force de pelage, mais également une amélioration surprenante de la résistance à la corrosion, tant pour le test de pulvérisation de brouillard salin que pour le test de Kesternich.

L'étude analytique, dans chaque cas après le test de pelage, des surfaces de la feuille de PVB et de la feuille de PET revêtue de l'exemple comparatif 1 et de l'exemple de réalisation 5 indique par ailleurs que sur la surface de la feuille de PVB, on ne trouve que de l'AlN, alors que, bien que l'on trouve de l'Ag et du Ti sur la couche de la feuille de PET, on n'y trouve cependant que des traces d'AlN. Comme l'AlN présente par conséquent une adhérence élevée à la surface de PVB, les valeurs mesurées lors du test de pelage fournissent une conclusion immédiate sur l'adhérence entre la couche d'AlN et la couche d'argent.

### Exemple 6 :

Le système de couches suivant, permettant de fabriquer des vitrages feuilletés avec une transmission dans le spectre visible supérieure à 70%, s'est avéré également efficace. Il utilise deux couches d'argent :
Substrat en PET - 30 nm TiO₂ - 10 nm Ag - 1 nm Ti - 56 nm TiO₂ - 10 nm Ag - 0,2 nm Ti - 40 nm AlN.

En conclusion, les deux variantes de l'invention ont pour but de renforcer l'adhésion de la ou des couches d'argent aux autres couches de l'empilement, tout particulièrement aux couches en nitrure avantageuses mais présentant de façon connue une adhésion peu satisfaisante à l'argent. L'invention a donc prévu une couche d'ancrage, à l'interface entre l'argent et le nitrure, et/ou de façon plus étonnante, une couche en ZnO sous l'argent. Une autre caractéristique originale de l'invention consiste à prévoir, de préférence dans le cas d'une seule couche d'Ag, sous l'argent que des couches en oxyde et sur l'argent que des couches en nitrure. Dans le cas de deux couches d'Ag, on préfère prévoir sous la première couche d'Ag des couches en oxyde. Au-dessus de la seconde couche d'Ag (la plus éloignée du substrat), on prévoit de préférence des couches en nitrure. Et entre les deux couches d'argent, on peut avoir des diélectriques exclusivement sous forme d'oxyde métallique ou exclusivement sous forme de nitrure ou associant ces deux types de matériaux. On peut ainsi avoir un diélectrique intermédiaire qui présente la séquence AlN/oxyde, notamment AlN/TiO₂ ou AlN/TiO₂/ZnO.

## Revendications

1. Système de couches réfléchissant les rayons thermiques pour des substrats transparents, comprenant au moins une couche fonctionnelle à base d'argent et des couches antireflet diélectriques, ***caractérisé en ce que*** la couche antireflet inférieure comporte un ou plusieurs oxydes métalliques, notamment TiO₂, SnO₂, Ta₂O₅, ZnO, Nb₂O₅, ***et en ce que*** Ici couche antireflet supérieure comporte de l'AlN, du Si₃N₄ ou de mélanges de ceux-ci, ***et en ce qu'entre*** la couche d'argent et la couche antireflet supérieure est disposée une couche formée de métal ou de sous-nitrure, d'une épaisseur de préférence de 0,1 à 1 nm, et destinée à améliorer l'adhérence.

2. Système de couches suivant la revendication 1, ***caractérisé en ce que*** la couche destinée à améliorer l'adhérence est formée de Ti, Zr, Al, Cr, Ni ou Hf, ou d'un mélange de ceux-ci ou des sous-nitrures de ceux-ci.

3. Système de couches suivant la revendication 1 ou 2, ***caractérisé en ce que*** la couche destinée à améliorer l'adhérence a une épaisseur comprise entre 0,2 et 0,5 nm.

4. Système de couches suivant l'une quelconque des revendications 1 à 3, ***caractérisé en ce qu'il*** comprend deux couches d'argent séparées l'une de l'autre par une couche antireflet diélectrique.

5. Système de couches suivant la revendication 4, ***caractérisé en ce que*** la couche antireflet diélectrique appliquée entre les couches d'argent est formée d'un oxyde métallique correspondant à la couche antireflet inférieure et en ce qu'une couche de blocage métallique est appliquée en dessous de cette couche d'oxyde métallique directement sur la couche d'argent.

6. Système de couches suivant la revendication 5, ***caractérisé en ce que*** la couche de blocage métallique appliquée sur la couche d'argent a une épaisseur d'environ 1 à 2 nm.

7. Système de couches suivant la revendication 6, ***caractérisé par*** la suite de couches suivante :substrat - 25 à 35 nm de TiO₂ - 8 à 12 nm Ag - 1 à 2 nm Ti - 50 à 60 nm TiO₂ - 8 à 12 nm d'Ag - 0,1 à 0,5 nm Ti - 35 à 45 nm AlN.

8. Système de couches réfléchissant les rayons thermiques pour des substrats transparents, comprenant au moins une couche fonctionnelle formée d'argent et des couches antireflet diélectriques, la couche antireflet supérieure comportant un nitrure métallique, comme AlN ou Si₃N₄, et la couche antireflet inférieure comprend un ou plusieurs des oxydes métalliques autres que le ZnO du type TiO₂, SnO₂, ZnO, Ta₂O₅ ou Nb₂O₅, sa partie supérieure, à savoir la partie contiguë à la couche d'argent, étant remplacée par du ZnO sur une épaisseur de notamment 5 à 15 nm.

9. Système de couches selon la revendication 8, ***caractérisé en ce que*** l'épaisseur optique de la couche partielle formée de ZnO corresponde à l'épaisseur optique de la partie de la couche d'oxyde remplacée par la couche partielle de ZnO.

10. Système de couches suivant la revendication 8 ou 9, ***caractérisé en ce qu'*** entre la couche antireflet supérieure constituée de nitrure métallique et la couche d'argent est disposée une couche formée de métal ou de nitrure métallique, d'une épaisseur de 0,1 à 1 nm, de préférence 0,2 et 0,5 nm améliorant l'adhérence.

11. Système de couches suivant la revendication 10, ***caractérisé en ce que*** la couche destinée à améliorer l'adhérence est formée de Ti, Zr, Al, Cr, Ni ou Hf, ou de mélanges de ceux-ci ou de sous-nitrures de ceux-ci.

12. Système de couches suivant l'une quelconque des revendications 8 à 12, ***caractérisé en ce qu'il*** comprend deux couches d'argent séparées l'une de l'autre par une couche antireflet diélectrique intermédiaire dont la partie supérieure, à savoir la partie directement contiguë à la deuxième couche d'argent, est également remplacée par une couche de ZnO.

13. Système de couches suivant la revendication 12, ***caractérisé en ce que*** la couche antireflet diélectrique intermédiaire est formée de la suite de couches nitrure métallique-oxyde métallique-ZnO, plus particulièrement de la suite de couches AlN-TiO₂-ZnO.

14. Système de couches suivant la revendication 12 ou 13, ***caractérisé en ce qu'*** une couche de blocage métallique est appliquée en dessous de la couche antireflet intermédiaire, directement sur la première couche d'argent.

15. Système de couches suivant la revendication 14, ***caractérisé en ce que*** la couche de blocage métallique a une épaisseur de 1 à 3 nm.

16. Système de couches suivant l'une quelconque des revendications précédentes, ***caractérisé en ce qu'il*** est appliqué sur un film transparent un polymère du type téréphtalate de polyéthylène, lequel est assemble par l'intermédiaire de feuilles adhésives thermoplastiques avec deux substrats de verre pour former un vitrage feuilleté.

17. Film polymère souple, ***caractérisé en ce qu'il*** est muni sur au moins une de ses faces du système de couches selon l'une des revendications précédentes.

18. Vitrage feuilleté, ***caractérisé en ce qu'il*** incorpore le film polymère selon la revendication 17.
